# NOUVEAU FASCICULE DE BREVET EUROPEEN

(11) **EP 0 213 028 B2**
(45) Date de publication et mention de la décision concernant l'opposition: **20.04.1994**
(45) Mention de la délivrance du brevet: 30.08.1989
(21) Numéro de dépôt: 86401706.6
(22) Date de dépôt: 31.07.1986
(51) Int. Cl.: G21C 17/06

(54) **Procédé et dispositif de contrôle des crayons de grappe pour assemblage de combustible nucléaire**
Verfahren und Vorrichtung zur Überprüfung von Stäben eines Stabkreuzes für ein Kernbrennstabbündel
Method and device for the control of rods of a spider assembly for a nuclear-fuel assembly

(30) Priorité: 01.08.1985 FR 8511781
(43) Date de publication de la demande: 04.03.1987
(73) Titulaire: FRAMATOME, 92400 Courbevoie (FR)
(72) Inventeur: Gebelin, Bernard, F-69100 Villeurbanne (FR); Couture, Roger, F-69160 Tassin-la-Demi-Lune (FR)
(74) Mandataire: Fort, Jacques

(56) Documents cités:
- EP-A- 0 095 553
- EP-A- 0 123 089
- DE-A- 2 844 747
- FR-A- 2 298 859
- FR-A- 2 466 772
- US-A- 4 376 582
- US-A- 4 449 411
- NUCLEAR ENGINEERING INTERNATIONAL, vol. 30, no. 365, février 1985, pages 41,42, Sutton, Surrey, GB; "Ultrasonics aids the identification of failed fuel rods"
- Conférence "Entwicklung von neuen Messverfahren im BE-Lagerbecken" von K. Knecht et al; KWU- Erlangen des 29-11-1979

## Description

La présente invention concerne l'examen des crayons de grappes insérables dans le coeur d'un réacteur nudéaire et elle a plus particulièrement pour objet un procédé et un dispositif d'examen permettant d'effectuer un premier examen de l'ensemble des crayons afin de déterminer leur degré d'usure et de compléter ce premier examen par un examen visuel et/ou une mesure par un autre procédé.

L'invention trouve une application particulièrement importante dans le contrôle des crayons appartenant aux grappes de réglage insérables dans les assemblages de combustible des réacteurs refroidis et modérés à l'eau légère, et notamment aux réacteurs à eau sous pression. Dans ces réacteurs on utilise des grappes de réglage constituées chacune d'un faisceau de crayons absorbants, au nombre de vingt-quatre par exemple, portés par les bras d'une pièce supérieure de manutention qu'on appelle généralement araignée. parmi ces grappes, certaines permettent de régler la réactivité pendant tout le fonctionnement normal du réacteur et en particulier de faire varier la puissance. D'autres grappes contiennent un poison consommable ét sont introduites dans le coeur uniquement pendant le premier cycle de fonctionnement de ce dernier. Enfin, dans d'autres grappes, les crayons constituent simplement des bouchons destinés à obturer les tubes-guides prévus dans les assemblages pour limiter le débit de réfrigérant qui contourne les crayons de combustible.

Il est nécessaire de vérifier périodiquement l'état des crayons pour déceler d'éventuels défauts de surface et, surtout dans le cas des grappes dont on modifie fréquemment le degré d'insertion dans le coeur, il est souhaitable de pouvoir vérifier le taux d'usure afin de déceler suffisamment tôt les risques de percement de la gaine ou de détérioration. Cette vérification est particulièrement utile lorsque la centrale nucléaire est utilisée en suivi de charge. ce mode de fonctionnement exigeant des modifications fréquentes du degré d'insertion des grappes dans le coeur.

On a déjà proposé (FR-A-2 298 859) un procédé d'examen non pas des crayons de grappes de réglage, mais des barreaux combustibles d'un réacteur nucléaire, ainsi qu'un disposiUf mettant en oeuvre le procédé. Le procédé est du type suivant lequel on déplace longitudinalement l'un par rapport à l'autre les crayons et un ensemble d'examen fournissant un signal de mesure. L'ensemble d'examen décrit dans ce document comprend un endoscope à prisme et un étrier muni de palpeurs permettant de mesurer le diamètre extérieur des crayons et/ou leur espacement.

Cette solution présente un certain nombre de limitations: l'examen visuel de l'état de surface des crayons permet uniquement de déterminer si des fissures sont déjà apparues. Il ne permet pas d'évaluer le risque d'apparition de telles fissures. La pince donne uniquement une mesure du diamètre dans une section déterminée. Elle ne permet pas de dresser une carte montrant l'usure sur toute la longueur du barreau, pas plus qu'une indication du taux d'usure.

La présente invention vise à fournir un procédé d'examen du type ci-dessus défini, répondant mieux que ceux antérieurement connus aux exigences de la pratique, notamment en ce qu'il permet de soumettre l'ensemble des crayons à une première étape d'examen pour déterminer ceux qui sont susceptibles d'être dans un état critique puis, dans une seconde étape, de compléter le diagnostic sur ces crayons seulement En ce sens, on peut dire que l'invention vise à fournir un procédé d'examen multifonctions, permettant une investigation variable, qui n'est complète que sur les crayons dont une première étape d'examen a révélé qu'ils sont susceptibles de présenter des risques.

Dans ce but, l'invention propose notamment un procédé du type ci-dessus défini, conforme à la partie caractérisante de la revendication 1.

Il sera souvent avantageux d'adopter une valeur m égale à quatre dans le cas d'un assemblage à section carrée, présentant une symétrie de révolution d'ordre quatre. En particulier, dans le cas des grappes comportant vingt quatre crayons fréquemment utilisées à l'heure actuelle sur les réacteurs à eau sous pression, un tel choix permet d'effectuer l'examen à l'aide de six bobines à courants de Foucault seulement, ce qui facilite la mise en place des bobines dans les moyens d'examen.

Le procédé est éventuellement complété par un examen visuel, complet et sur toute la périphérie d'un seul crayon à la fois, à l'aide d'une caméra, au cours de la descente et de la remontée d'un crayon douteux. En particulier, il est possible d'examiner la face avant du crayon lors de la descente de la grappe et la face arrière lors de la remontée de la grappe, en utilisant les miroirs placés derrière le crayon et associés à la caméra

L'examen visuel ou l'examen ultra-sonore peut être effectué sur un crayon douteux, repéré lors d'un contrôle par courants de Foucault antérieur, en même temps que l'on effectue le contrôle par courant de Foucault d'un jeu de n/m crayons supplémentaires.

L'invention sera mieux comprise à la lecture de la description qui suit d'un dispositif qui en constitue un mode particulier de réalisation, donné à titre d'exemple non limitatif. La description se réfère aux dessins qui l'accompagnent, dans lesquels:
La Figure 1 est une vue en perspective de la partie haute d'une grappe de réglage d'un type actuellement utilisé sur les réacteurs à eau sous pression,
La Figure 2 est une vue en coupe partielle simplifiée d'un bâtiment de combustible pour centrale nucléaire, pouvant être équipé d'un dispositif suivant l'invention,
La Figure 3 est une vue schématique en élévation de la partie haute d'un dispositif d'examen muni de déflecteurs destinés à guider un grappin de manutention lors de la descente,
La Figure 4 montre schématiquement la partie haute d'un dispositif suivant l'invention et un synoptique des organes associés, les déflecteurs, le mécanisme ultrasons et son électronique n'étant pas représentés,
La Figure 5 est une vue en élévation de l'embout supérieur et du haut du corps du dispositif de la Figure 4,
La Figure 6 est une vue de l'embout supérieur, de la platine de positionnement et de la partie haute du corps du dispositif de la Figure 4, en coupe suivant le plan VI-VI de la Figure 7,
La Figure 7 est une vue de dessus de la platine et de l'embout supérieur, à partir d'un plan directement au-dessus des bobines à courant de Foucault,
La Figure 8 montre un mode de réalisation possible d'une rehausse amovible destinée à équiper le dispositif d'examen,
La Figure 9 est une vue de dessus d'une fraction de la rehausse amovible de la Figure 8,
La Figure 10 est une vue de dessus montrant, à la partie haute, la première plaque entretoise et, à la partie basse, la dernière plaque entretoise du corps du dispositif,
La Figure 11 est une vue en coupe suivant la ligne XI-XI de la Figure 7, montrant le mode de fixation des miroirs de contrôle visuel,
La Figure 12 est une vue de gauche de la Figure 11,
La Figure 13 montre schématiquement une constitution possible de platine à commande automatique à distance, portant un palpeur tournant à ultrasons, en coupe suivant un plan vertical,
La Figure 14 est une vue en coupe suivant la ligne XIV-XIV de la Figure 13.

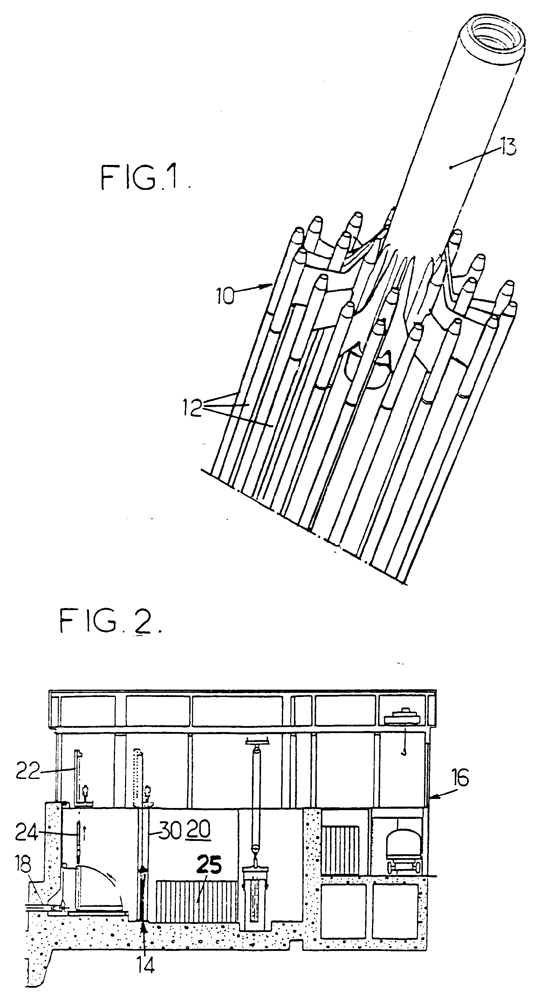

Le dispositif d'examen qui sera maintenant décrit à titre d'exemple, est destiné à l'examen des grappes de contrôle d'un réacteur nucléaire dont les assemblages de combustibles comportent des crayons répartis aux noeuds d'un réseau carré. La grappe 10 montrée en Fig. 1 comporte vingt-quatre crayons absorbants 12 portés par une araignée 13. Ces crayons sont destinés à coulisser dans des tubes-guides répartis en certains des 17 x 17 noeuds du réseau des crayons de combustibles dans l'assemblage. Chaque crayon absorbant 12 se termine par une ogive facilitant son insertion.

Le dispositif d'examen 14 suivant l'invention sera généralement placé dans le bâtiment du combustible 16 accolé à l'enceinte du réacteur nucléaire (non représenté) et communiquera avec cette enceinte par un sas 18. Ce sas débouche dans une piscine 20 contenant le dispositif 14. Une machine de manutention 22 permet de saisir un assemblage combustible 24 à la fois et de l'amener dans un alvéole de stockage 25. La machine 22 est prévue pour être équipée d'un outil de manutention des grappes permettant alors d'extraire la grappe contenue dans l'assemblage et de l'insérer dans le dispositif de contrôle 14.

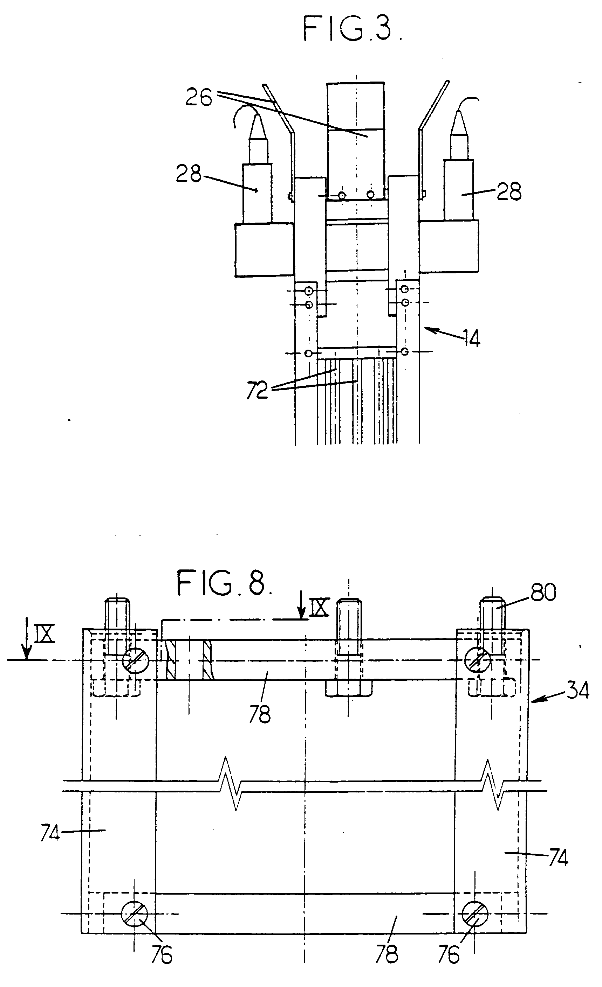

Le dispositif 14 peut se présenter sous forme d'un ensemble autonome, manipulable à l'aide de la machine de manutention. Comme le montre la Fig. 3 il peut être muni à son extrémité haute de déflecteurs 26 constitués par des tôles pliées permettant de centrer et d'orienter la partie basse de l'outil de manutention des grappes, constituant le grappin. Le dispositif peut par ailleurs être équipé de projecteurs 28, étanches de façon à pouvoir fonctionner en piscine. Lorsqu'une opération de contrôle doit être effectuée, le dispositif 14 complet est placé dans une installation permettant de l'immerger à une profondeur réglable dans la piscine. On peut notamment placer le dispositif dans le panier du descenseur 15 généralement prévu dans les piscines de stockage.

On ne décrira pas ici les composants permettant de manipuler les assemblages, le dispositif 14 et les grappes 10, car ils peuvent avoir une constitution classique. En ce qui concerne notamment les outils de manutention, on pourra se reporter pour en trouver une description au document EP-A1 0 138 711.

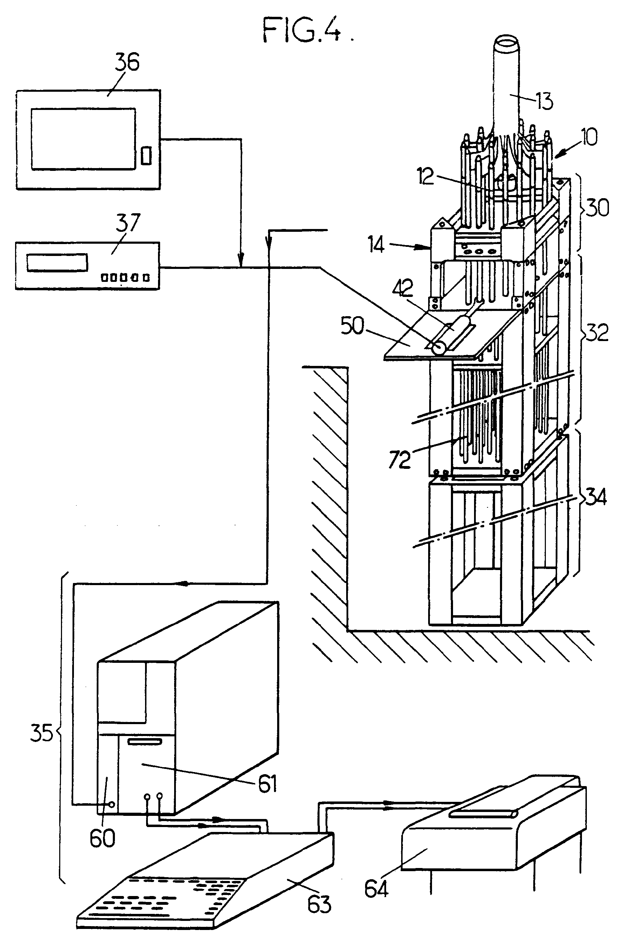

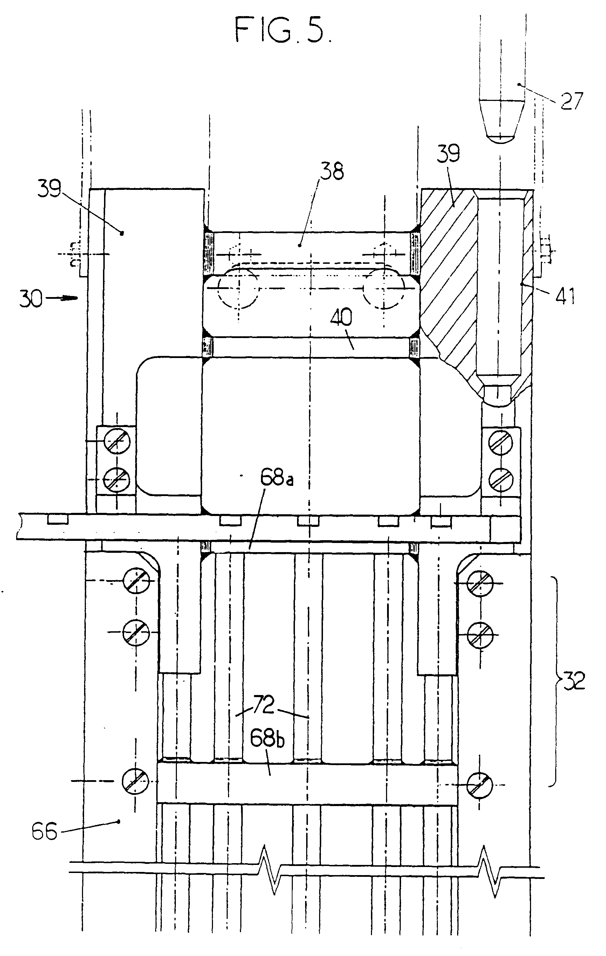

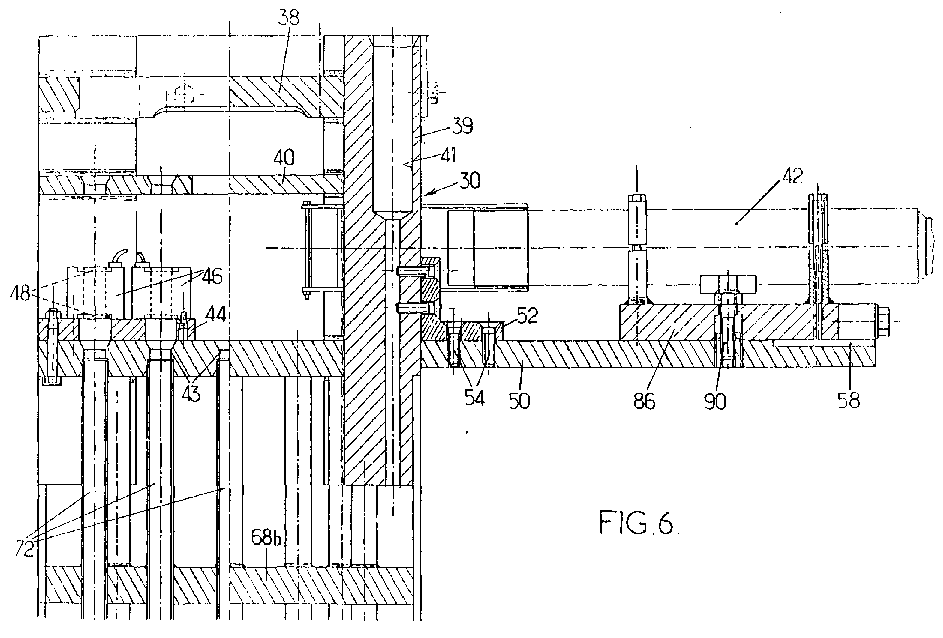

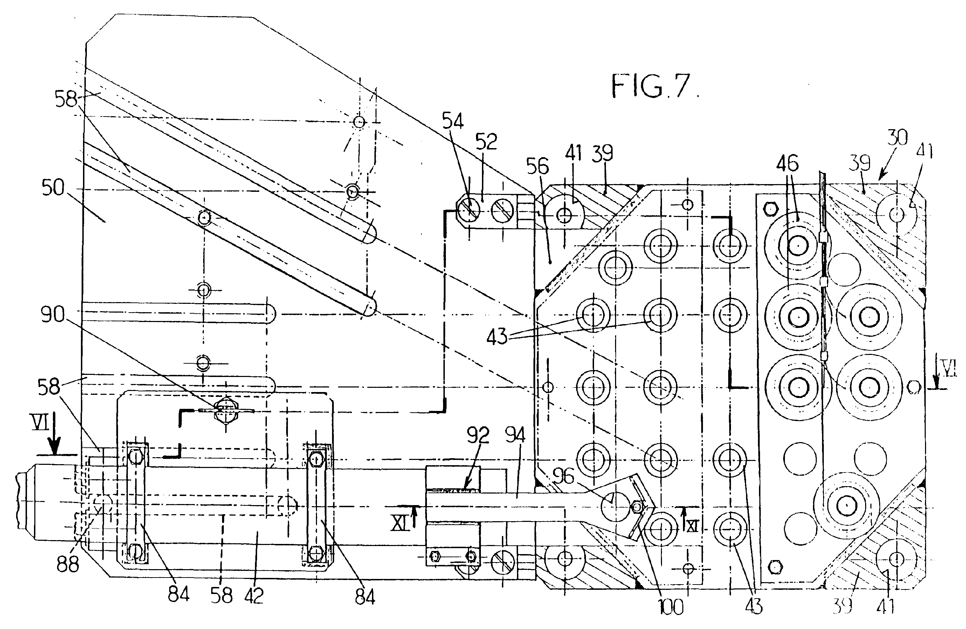

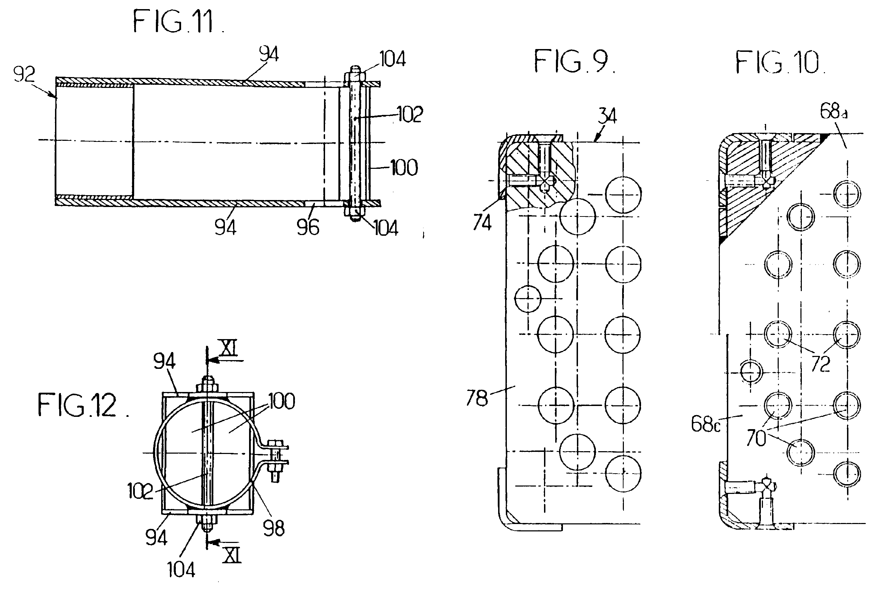

Le dispositif 14 montré en Fig. 4 peut être considéré comme constitué de:
un embout supérieur 30 (Fig. 5 à 7) délimitant une zone d'examen,
un corps 32 (Fig. 5 et 6) muni de tubes 72 de guidage des crayons de la grappe,
une rehausse amovible 34 (Fig. 8) permettant de placer le dispositif dans un alvéole de stockage de combustible à une hauteur telle que l'embout soit au-dessus de l'extrémité haute de I'alvéole,
une platine horizontale (50), qui peut être soit à commande manuelle (Fig. 6 et 7) soit à télécommande (Fig. 13) permettant d'amener un palpeur à ultrasons ou une caméra dans la zone d'examen à un emplacement de contrôle de l'une quelconque de huit positions de crayons.

Le dispositif est complété par un équipement 35 de traitement de données et de visualisation placé hors de la piscine, destiné à traiter les signaux de contrôle par courant de Foucault et par ultrasons. Il comporte également un moniteur de télévision 36 et éventuellement un magnétoscope 37 associés à la caméra de visualisation 42 qui constitue en général l'organe de contrôle optique.

### Embout supérieur

L'embout supérieur 30 (Fig. 5 à 7) est constitué de quatre pieds 39 ayant un profil triangulaire et placés aux quatre coins d'un carré ayant la même section qu'un assemblage combustible. Dans chaque pied est percé un alésage 41. Pour chaque orientation de l'outil de manutention des grappes, deux doigts de centrage 27 (Fig. 5) portés par l'outil viennent s'engager dans deux alésages placés suivant une diagonale, de façon à garantir le bon positionnement de l'outil et l'engagement correct de la grappe.

Les pieds 39 sont reliés à leur partie supérieure par des plaquettes soudées 38 de rigidification, servant aussi à l'accrochage des doigts mobiles de l'outil de manutention des grappes. Les pieds 39 sont également reliés dans leur partie médiane, par une plaque adaptatrice 40. Vingt-quatre trous 43 (Fig. 6 et 7) sont percés dans la plaque 40 suivant une disposition reproduisant celle du réseau des crayons 12 dans la grappe 10.

La partie inférieure de l'embout 30 délimite une zone d'examen. Cette zone est munie de moyens de contrôle par courant de Foucault et s'ouvre vers la platine, pour donner accès au moyen de contrôle visuel et par ultrasons.

Les moyens de contrôle par courant de Foucault sont portés par une semelle 44 percée de dix trous dont la répartition reproduit celle de dix des crayons de la grappe. Au-dessus de six de ces trous sont placées des bobines à courant de Foucault 46 qui encerclent complètement le trajet du crayon et sont prévues pour fonctionner en mode absolu. Une rondelle de centrage 48 est collée à chaque extrémité des bobines pour faciliter le centrage.

Dans le mode de réalisation illustré, six bobines seulement sont prévues afin de limiter leur encombrement. Ce nombre n'est cependant pas limitatif et on peut par exemple prévoir douze bobines, voire même autant de bobines que de crayons si l'on souhaite effectuer le contrôle en une seule passe.

Les bobines 46 sont associées à l'équipement de traitement de données 35 qui comportera généralement un tiroir oscillateur 60 (Fig. 4) fournissant un signal électrique à la fréquence choisie pour le contrôle par courant de Foucault et un tiroir de traitement 61 fournissant des signaux analogiques représentant les projections du signal de mesure dans deux directions orthogonales de la section d'un crayon. Les signaux provenant des six bobines sont traités indépendamment par un calculateur 63 et les résultats peuvent être fournis sur une imprimante ou une table traçante 64 (Fig. 4).

Il sera toujours préférable, pour compenser les effets d'ambiance, et notamment les variations de température, et l'impédance des câbles, d'effectuer des mesures différentielles. Pour cela, chacune des bobines 46 sera associée à une bobine de référence (non représentée), identique à la première, encerclant un tronçon de crayon neuf et montée à proximité de la première.

### Platine de positionnement

On décrira maintenant la platine de positionnement montrée à titre d'exemple en Fig. 5, 6, et 7, prévue pour une mise en place et un positionnement manuels de la caméra 42 d'examen optique et du palpeur à ultrasons (non représenté sur ces figures). La platine 50 est constituée par une plaque horizontale fixée sur deux des pieds 39, par exemple par des équerres 52 et des vis 54. Des lumières 56 découpées dans les deux pieds 39 qui reçoivent les équerres fournissent un accès à la zone d'examen depuis le dessus de la platine 50. Dans la face supérieure de cette dernière, sont ménagées six rainures 58 permettant de donner à la caméra six positions différentes correspondant chacune à l'examen d'un crayon placé dans un trou différent 43 (Fig. 7).

### Corps

Le corps 32 du dispositif (Fig. 5) est constitué de quatre cornières 66 reliées par des entretoises régulièrement espacées. La plaque entretoise haute 68a et une plaque intermédiaire 68b apparaissent sur la Fig. 5. La plaque 68a et la plaque inférieure 68c apparaissent sur la Fig. 10. Les pieds 39 de l'embout sont soudés sur la première plaque entretoise haute 68a. Toutes les plaques entretoises sont percées de trous alignés 70, dont la répartition reproduit celle du réseau des crayons de la grappe et dans lesquels sont emmanchés des tubes-guides 72 de diamètre tel que les crayons puissent y glisser. L'assemblage des plaques entretoise et des cornières peut être effectué par des moyens quelconques, par des vis dans le cas montré en Fig. 5.

### Rehausse

Le rôle de la rehausse 34 est de permettre de placer le dispositif dans un alvéole de stockage d'assemblage combustible, la platine étant au-dessus de l'ouverture supérieure de l'alvéole. Plusieurs rehausses de longueur différente peuvent être prévues. Chaque rehausse peut avoir la constitution générale montrée en Fig. 8 et 9, similaire à celle du corps. La rehausse 34 comporte quatre cornières verticales 74 fixées à l'aide de vis 76 (ou par tout autre moyen) à des plaques entretoises 78 percées de vingt-quatre trous répartis suivant le réseau des crayons dans la grappe de contrôle. Des moyens de fixation de la rehausse 34 sur le corps 32 peuvent être prévus. Dans le cas montré en Fig. 8, ils sont constitués par des vis 80 prévues pour s'engager dans des trous taraudés de la plaque entretoise inférieure 68c du corps.

### Ensemble de contrôle visuel

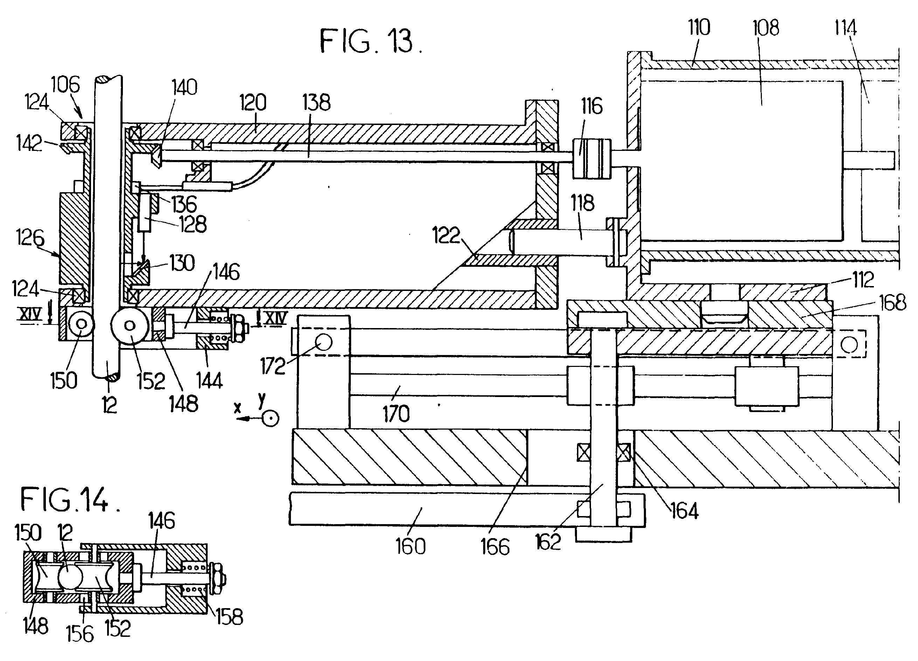

Les Figures 6, 7, 11 et 12 montrent un ensemble de contrôle visuel dont l'élément de prise d'image est constitué par une caméra 42 associée à un porte-miroir. Le corps de la caméra 42 est pincé entre deux étriers 84 soudés sur une semelle 86 dont l'orientation par rapport à la rainure de réception 58 est assurée par deux pions d'orientation 88 emmanchés dans la semelle. Une vis papillon 90 permet de bloquer la semelle 86 sur la platine 50.

Le porte-miroir 92 (Fig. 7, 11 et 12) est constitué de deux plaquettes 94 en forme de flèche. Chaque plaquette est percée d'un trou 96 de passage du crayon en cours d'inspection. Les extrémités basses des plaquettes 94 sont soudées sur un collier de serrage 98 permettant de fixer le porte-miroir sur le corps de la caméra. Deux miroirs 100, faisant un angle de 120°, sont placés aux extrémités des plaquettes 94 et sont maintenus en place par un tirant 102 muni d'écrous de serrage 104. Les miroirs 100 permettent d'observer la face arrière du crayon en cours d'inspection si l'on effectue la mise au point de la caméra 42 sur les images fournies par les miroirs plutôt que sur la face avant du crayon observé.

### Ensemble de contrôle par ultrasons

L'ensemble de contrôle par ultrasons est représenté en Fig. 13 placé sur une platine commandée à distance. Mais il pourrait aussi bien être monté sur une platine 50 du genre montré en Fig. 6.

L'ensemble de contrôle 106 peut être regardé comme comportant un bloc de commande et un bloc de contrôle.

Le bloc de commande est destiné à être fixé sur la platine. Il comprend une enceinte étanche 110 montée sur la platine par une équerre 112 et contenant un moteur électrique 108 (généralement à courant continu) associé à un codeur angulaire 114. L'arbre de sortie du moteur 108 est muni d'un accouplement souple 116 et le boîtier étanche 110 est muni d'une colonne de guidage horizontale 118 parallèle à l'arbre.

Le bloc de contrôle est constitué et couplé au bloc de commande de façon telle qu'il puisse tolérer les déformations du crayon 12 à contrôler. Ce bloc de contrôle comporte un support 120 relié au bloc de commande par engagement de la colonne de guidage 118 dans un guide 122 appartenant au support 120. Cette colonne de guidage 118 autorise des déplacements de faible amplitude du support 120 en rotation et en translation le long de la colonne, ce qui permet au bloc de contrôle de s'adapter aux éventuels défauts de rectitude des crayons 12.

Les plaques inférieure et supérieure du support 120 sont percées d'ouvertures dans lesquelles sont placés des roulements 124 qui reçoivent un équipage rotatif 126 entourant l'emplacement occupé par le crayon 12 à examiner. L'équipage 126 est constitué par un manchon rotatif sur lequel est monté un palpeur à ultrasons focalisés 128. Dans le mode de réalisation illustré, le palpeur est placé parallèlement à l'axe vertical de rotation du manchon 126 et les faisceaux d'ultrasons émis et reçus sont réfléchis par un miroir incliné 130. L'alimentation électrique du palpeur et la transmission des signaux sont effectuées par l'intermédiaire d'un contact électrique tournant 136.

Le manchon est muni d'un mécanisme d'entraînement en rotation permettant d'inspecter un crayon sur toute sa périphérie à l'aide du palpeur 128. Le mécanisme d'entraînement représenté comprend un arbre de transmission 138 qui tourne dans des paliers portés par la plaque supérieure du support 120. Cet arbre 138 est relié à l'arbre de sortie du moteur 108 par l'accouplement flexible 116 qui tolère un désalignement de l'arbre moteur et de l'arbre de transmission. Cet arbre de transmission 138 se termine par un pignon conique 140 qui engrène une roue conique 142 portée par le manchon 126. L'ensemble de contrôle par ultrasons montré en Fig. 13 comprend encore un dispositif de positionnement relatif du crayon 12 par rapport au palpeur 128. Ce dispositif de positionnement est constitué par un centreur élastique porté par la plaque inférieure du support 120. Le centreur comporte un étrier 144 fixé à la plaque support et dans lequel peut coulisser une tige 146 vers le crayon et à partir de ce dernier. La tige porte un chariot 148 sur lequel tourne un galet mobile 150 dont la forme épouse celle du crayon. Un second galet 152 est monté sur un axe porté par l'étrier 144, pouvant coulisser dans des boutonnières 156 du chariot 148. Un ressort de rappel 158 tend à repousser le chariot 148 dans un sens tel que le galet mobile 150 applique le crayon 12 contre le galet fixe 152. On voit que cette disposition assure le centrage du crayon par rapport au palpeur à ultrasons, tout en restant susceptible de tolérer, par coulissement du chariot 148, des déformations notables.

Comme on l'a indiqué plus haut, la platine à mise en place manuelle de la caméra peut être remplacée par une platine dont les déplacements sont commandés à distance, et qui porte la caméra ou l'ensemble de contrôle par ultrasons dans une position fixe.

La platine commandée à distance montrée à titre d'exemple en Fig. 13 est prévue pour permettre de placer la caméra de contrôle visuel ou le palpeur à ultrasons 128 dans l'une quelconque des six positions correspondant à six crayons à inspecter, ces six positions étant distinctes de celles occupées par les bobines à courant de Foucault.

La platine montrée en Fig. 13 comprend une table à mouvements croisés selon deux directions horizontales xy. Les déplacements de cette table, dans une plage limitée, sont commandés par un système bielle-manivelle. La bielle 160 dont la manivelle (non représentée) est entraînable par un moteur (non représenté) ou manuellement depuis le dessus de la piscine et porte un axe 162 sur lequel est fixé un galet de mise en position 164. Lors des déplacements en translation et en rotation de la bielle 160, provoqués par la manivelle (non représentée), le galet 164 suit le tracé d'une came 166 prévue dans la platine et entraîne le plateau porte-outillage 168. La table à mouvements croisés comprend un premier jeu d'arbres 170 parallèle à la direction x et un second jeu d'arbres 172 parallèle à la direction y, permettant le déplacement d'un plateau de béquerre 112.

Quel que soit le mode de réalisation adopté, le fonctionnement est le suivant:

Au cours d'une première étape, la grappe de crayons de réglage est descendue dans le dispositif et six crayons de la grappe sont simultanément contrôlés à l'aide de l'ensemble de contrôle à courant de Foucault. Ce contrôle peut être effectué au cours de la descente et au cours de la remontée et les résultats sont enregistrés. Une fois la grappe remontée, les mêmes opérations sont répétées dans trois autres orientations, respectivement décalées de 90°, 180°, 270° à partir de la position d'origine: on obtient ainsi une image de la variation globale d'usure de chacun de crayons de la grappe et on peut déceler ceux des crayons dont l'usure (notamment par perte de matière sur les gaines) est telle qu'ils doivent être vérifiés de façon plus précise, au moins localement.

Au cours d'une seconde opération, qui est mise en oeuvre en même temps que la première est effectuée sur d'autres crayons de la même grappe, on effectue un contrôle par ultrasons.

Le contrôle par ultrasons est prévu pour être effectué uniquement sur un crayon à la fois, ce qui est en général suffisant étant donné qu'il n'y a pas vérification systématique de tous les crayons sur toute leur longueur. Pour cela le palpeur à ultrasons est mis en rotation autour du crayon en même temps que celui-ci se déplace. On peut avantageusement prévoir un relevé d'un point de profil extérieur tous les trois degrés d'angle, avec une rotation d'environ un tour par seconde.

Enfin, l'examen visuel est réalisé à l'aide de la caméra de télévision, qui pourrait d'ailleurs être remplacée par un endoscope dans la mesure où l'on ne souhaite pas disposer d'un enregistrement. Au cours de la descente (ou de la remontée) du crayon, la caméra est mise au point sur la face avant du crayon à vérifier, ce qui permet de déceler visuellement des criques ou fissures éventuelles ou bien d'attester de la perte d'une ogive d'extrémité, Au cours de la remontée (ou de la descente) on fait la mise au point sur l'image fournie par les miroirs 100, ce qui permet d'avoir une image globale du crayon dans les zones critiques. La mise en place de la caméra ou de l'ensemble de contrôle par ultrasons pour qu'elle corresponde au crayon à vérifier s'effectue, lorsqu'on utilise une platine du genre montré en Fig. 6, après avoir relevé le dispositif à l'aide du descendeur afin de l'amener à portée d'un outil de manipulation à distance, par commande électrique dans le cas d'une platine du genre montré en Fig. 13.

L'invention ne se limite évidemment pas au mode particulier de réalisation qui a été représenté et décrit. Elle est applicable quel que soit le nombre de crayons d'une grappe et quelle que soit la nature de ces crayons, y compris lorsqu'ils contiennent un matériau fertile utilisé par exemple pour faire varier le spectre d'énergie des neutrons dans le réacteur.

## Revendications

1. Procédé d'examen de crayons (12) d'une grappe (10) insérable dans le coeur d'un réacteur nucléaire suivant lequel on déplace longitudinalement l'un par rapport à l'autre la grappe de crayons et un ensemble d'examen fournissant un signal de mesure, caractérisé en ce que:
dans une première étape, on descend la grappe, comportant un nombre n de crayons, à travers un ensemble d'examen à l'aide duquel on effectue un examen par courants de Foucault sur n/m crayons à la fois, m étant un nombre entier, et on répète cette opération m fois après avoir chaque fois fait tourner la grappe d'un angle de 360°/m afin de déterminer les crayons douteux,
au cours d'une seconde étape, on vérifie un à un les crayons douteux par sondage ultrasonique au cours de la descente et de la remontée du crayon, sur toute la longueur axiale jugée douteuse et suivant plusieurs profils afin de donner une cartographie des zones douteuses.

2. Procédé d'examen de crayons selon la revendication 1, caractérisé en ce qu'on effectue l'examen par courants de Foucault suivant n/m crayons à la fois dans le cas d'une grappe ayant une symétrie de révolution d'ordre m.

3. Procédé selon la revendication 1 ou 2, caractérisé en ce qu'on effectue un examen visuel, complet et sur toute la périphérie d'un seul crayon à la fois, à l'aide d'une caméra, au cours de la descente et de la remontée d'un crayon douteux, par exemple en examinant la face avant du crayon lors de la descente de la grappe et la face arrière lors de la remontée de la grappe, en utilisant des miroirs placés derrière le crayon et associés à la caméra.

4. Procédé selon la revendication 1, 2 ou 3, caractérisé en ce qu'on effectue l'examen visuel ou ultrasonique d'un crayon douteux, repéré lors d'un contrôle antérieur par courants de Foucault, en même temps que l'on effectue le contrôle par courant de Foucault d'un jeu de n/m crayons supplémentaires.

5. Dispositif d'examen de crayons (12) d'une grappe (10) insérable dans le coeur d'un réacteur nucléaire, comprenant un corps (32) muni de moyens (72) de guidage coulissant des crayons de la grappe dans m orientations différentes de cette dernière, caractérisé en ce que le corps comporte un embout supérieur (30) traversé par les crayons au cours de leur déplacement dans le corps et muni de n/m bobines (46) à courants de Foucault (n étant le nombre total des crayons de la grappe) associées à un équipement (35) de traitement de données permettant de repérer les crayons douteux et en ce que le corps comporte de plus des moyens d'examen complémentaire, par ultrasons, d'un seul crayon à la fois parmi les crayons autres que ceux traversant les bobines au cours dudit déplacement des crayons de la grappe dans le corps, pendant son utilisation pour la mise en oeuvre du procédé de la revendication 1.

6. Dispositif selon la revendication 5, caractérisé en ce que chaque bobine à courants de Foucault (46) est associée dans un montage différentiel avec une seconde bobine entourant un crayon neuf. afin d'obtenir un signal dépendant de l'état d'usure dans une section du crayon examiné par rapport à un tronçon de crayon neuf en compensant les effets d'ambiance et de longueur de cable.

7. Dispositif selon la revendication 5 ou 6, d'examen de grappes destinées à des assemblages combustibles où les crayons sont répartis suivant un pas carré, caractérisé en ce que le dispositif est prévu pour recevoir la grappe dans m = 4 orientations différentes.

8. Dispositif seion la revendication 5, 6 ou 7, caractérisé en ce que les moyens d'examen complémentaire comprennent un palpeur ultrasonique (128) à émission focalisée monté sur un équipage (126, 142) monté sur l'embout de façon à pouvoir tourner et des moyens (108, 116, 138, 149) pour entraîner l'équipage en rotation autour du crayon à contrôler en vue d'obtenir une représentation complète de ce dernier.

9. Dispositif selon la revendication 8, caractérisé en ce que l'axe du palpeur (128) est disposé parallèlement à l'axe du crayon et en ce que lesdits moyens d'examen complémentaire comprennent des moyens (130) de déviation des faisceaux d'ultrasons émis vers le crayon et du faisceau d'ultrasons réfléchi vers le palpeur.

10. Dispositif selon l'une quelconque des revendications 5 à 9, caractérisé en ce que les moyens d'examen complémentaire comprennent une caméra (42) munie d'un support (92, 94) prévu pour livrer passage aux crayons à examiner et portant des miroirs (100) de vision de la face du crayon opposée à la caméra.

11. Dispositif. selon l'une quelconque des revendications 5 à 10, caractérisé en ce que l'embout supérieur (30) est solidaire d'une platine (50) prévue pour recevoir les moyens d'examen complémentaire dans plusieurs positions correspondant chacune à l'examen d'un crayon particulier de la grappe ou pour amener les dits moyens dans cette position.

12. Dispositif selon l'une quelconque des revendications 5 à 11, caractérisé en ce que l'embout est muni de moyens de centrage (27) de la grappe et d'amenée de cette dernière dans l'une des m positions.

## Patentansprüche

1. Verfahren zur Überprüfung von Stäben (12) eines Bündels (10), das in den Reaktorkern eines Kernreaktors einbringbar ist, gemäß dem das Stabbündel und eine Überprüfungsvorrichtung, die ein Meßsignal liefert, das eine gegenüber der anderen längsverschoben wird, dadurch gekennzeichnet, daß:
in einem ersten Schritt das Bündel, das eine Anzahl n von Stäben aufweist, durch eine Überprüfungsvorrichtung hindurch herabgelassen wird, mit Hilfe derer eine Überprüfung durch Wirbelströme auf n/m Stäbe gleichzeitig ausgeübt wird, wobei m eine ganze Zahl ist, und dieser Vorgang m mal wiederholt wird, nachdem jedesmal das Bündel um einen Winkel von 360°/m gedreht wurde, um die zweifelhaften Stäbe zu bestimmen,
während eines zweiten Schritts die zweifelhaften Stäbe einer nach dem anderen durch eine Ultraschalluntersuchung während des Absenkens und des Anhebens des Stabs über die gesamte axiale Länge, die als zweifelhaft beurteilt wurde, überprüft werden und gemäß mehrerer Profile, um eine Darstellung der zweifelhaften Zonen anzugeben.

2. Überprüfungsverfahren von Stäben nach Anspruch 1, dadurch gekennzeichnet, daß die Überprüfung durch Wirbelströme gemäß n/m Stäben gleichzeitig in dem Fall ausgeführt wird, in dem ein Bündel eine Drehungssymmetrie von der Ordnung m aufweist.

3. Verfahren nach Anspruch 1 oder 2, dadurch gekennzeichnet, daß eine Sichtprüfung durchgeführt wird, die komplett und über den gesamten Außenumfang eines einzelnen Stabs gleichzeitig unter Zuhilfenahme einer Kamera während des Herabsenkens und Anhebens eines zweifelhaften Stabs durchgeführt wird, beispielsweise durch Überprüfen der Vorderseite des Stabs bei dem Absenken des Bündels und der Hinterseite während des Anhebens des Bündels, unter Verwendung von Spiegeln, die hinter dem Stab angeordnet sind und der Kamera zugeordnet sind.

4. Verfahren nach Anspruch 1, 2 oder 3, dadurch gekennzeichnet, daß die Sichtprüfung oder die Ultraschall- prüfung eines zweifelhaften Stabs, der während einer vorhergehenden Kontrolle durch Wirbelströme ausgemacht wurde, zu gleicher Zeit durchgeführt wird, wie die Kontrolle mittels Wirbelstrom eines Satzes von n/m zusätzlichen Stäben.

5. Überprüfungsvorrichtung von Stäben (12) eines Bündels (10), das in den Reaktorkern eines Kernreaktors einbringbar ist, welche einen Körper (32) aufweist, der mit Führungseinrichtungen (72) versehen ist, die die Stäbe des Bündels in m unterschiedliche Richtungen des letzteren gleitverschieben, dadurch gekennzeichnet, daß der Körper ein oberes Endstück (30) aufweist, das durch die Stäbe während ihrer Bewegung in dem Körper durchquert wird und mit n/m Spulen (46) mit Wirbelströmen versehen ist (n ist die Gesamtanzahl der Stäbe des Bündels), verbunden mit einer Datenverarbeitungseinrichtung (35), zur Auffindung der zweifelhaften Stäbe und daß der Körper Zusatzüberprüfungsein- richtungen durch Ultraschall enthält, um einen einzigen Stab gleichzeitig unter den Stäben, die die Spulen während dieser Bewegung der Stäbe des Bündels im Körper nicht durchqueren, zu prüfen, während der Verwendung der Vorrichtung im Rahmen des Verfahrens nach Anspruch 1.

6. Vorrichtung nach Anspruch 5, dadurch gekennzeichnet, daß jede Wirbelstrom-Spule (46) in einer Differenzschaltung mit einer zweiten Spule verbunden ist, die einen neuen Stab umgibt, um ein Signal in Abhängigkeit des Abnützungszustands in einem untersuchten Stababschnitt bezüglich eines neuen Stababschnitts zu erhalten, unter Kompensierung der Umgebungsbedingungen und der Länge des Kabels.

7. Vorrichtung nach Anspruch 5 oder 6 zur Überprüfung von Bündeln für Brennelementkassetten, wo die Stäbe gemäß einem Rechteck verteilt sind, dadurch gekennzeichnet, daß die Vorrichtung geeignet ist, um das Bündel in m=4 unterschiedliche Richtungen aufzunehmen.

8. Vorrichtung nach Anspruch 5, 6 oder 7, dadurch gekennzeichnet, daß die Zusatzüberprüfungseinrichtungen einen Ultraschallwandler (128) mit fokalisierter Emission aufweisen, der auf einer Ausrüstung (126, 142) angeordnet ist, die an dem Endstück derart angeordnet ist, um sich drehen zu können, und Einrichtungen (108, 116, 138, 149) aufweist, um die Ausrüstung in Drehung um den zu überprüfenden Stab zu versetzen, um eine vollkommene Darstellung des letzteren zu erhalten.

9. Vorrichtung nach Anspruch 8, dadurch gekennzeichnet, daß die Achse des Wandlers (128) parallel zur Achse des Stabs angeordnet ist, und daß die Zusatzüberprüfungseinrichtungen Ablenkungseinrichtungen (130) der Ultra- schallwellen, die in Richtung auf den Stab ausgesendet werden und der Ultraschallwellen, die in Richtung auf den Wandler reflektiert werden, aufweisen.

10. Vorrichtung nach einem der Ansprüche 5 bis 9, dadurch gekennzeichnet, daß die Zusatzüberprüfungseinrichtungen eine Kamera (42) aufweisen, die mit einem Träger (92, 94) versehen ist, der vorgesehen ist, um eine Passage für die zu untersuchenden Stäbe zu bilden, und Spiegel (100) zur Besichtigung der Seite des Stabs trägt, die der Kamera gegenüberliegt.

11. Vorrichtung nach einem der Ansprüche 5 bis 10, dadurch gekennzeichnet, daß das obere Endstück (30) mit einer Tragplatte (50) verbunden ist, die vorgesehen ist, um die Zusatzüberprüfungseinrichtungen in mehreren Positionen aufzunehmen, wobei jede der Überprüfung eines einzelnen Stabs des Bündels entspricht, oder um die Einrichtungen in diese Position zu bringen.

12. Vorrichtung nach einem der Ansprüche 5 bis 11, dadurch gekennzeichnet, daß das Endstück mit Einrichtungen (27) für die Zentrierung des Bündels und die Versetzung des letzteren in eine der m Stellungen versehen ist.

## Claims

1. Process for inspecting rods (12) of a cluster (10) insertable into the core of a nuclear reactor, according to which the rod cluster and an inspection unit delivering a measurement signal are longitudinally displaced with respect to each other, characterized in that
- during a first step, the cluster comprising n rods is moved down through an inspection unit with which an inspection by eddy currents is carried out on n/m rods at the same time, m being an integer, and the operation is repeated m times each time after the cluster was turned by an angle of 360°/m for detecting the doubtful rods,
- during a second step, the doubtful rods are tested one by one by ultrasonic testing during the down and up movement of the rod, on the whole axial length found doubtful and along a plurality of profiles in order to provide a map of the doubtful zones.

2. Rod inspection processing according to claim 1, characterized in that the eddy current testing is carried out on n/m rods at the same time in a cluster having a rotational symmetry of order m.

3. Process according to claim 1 or 2, characterized in that a complete visual examination over the entire periphery of one rod at a time is carried out with a camera, during the down and up movement of the doubtful rod, for instance by inspecting the front face of the rod during down movement of the cluster and the rear face during up movement of the cluster, with the use of mirrors placed behind the rod and associated with the camera.

4. Process according to claim 1, 2 or 3, characterized in that visual or ultrasonic examination of the doubtful rod, identified during an earlier inspection by eddy currents, is carried out at the same time as a supplemental set of n/m supplemental rods is inspected by eddy currents.

5. Device for inspecting the rods (12) of a cluster (10) insertable into the core of a nuclear reactor core, comprising a body (32) provided with means (72) for slidably guiding rods of the cluster in m different angular positions of the latter, characterized in that the body comprises a higher part (30) traversed by the rods during their movement in the body and provided with n/m eddy current coils (46) (n being the total number of the rods in the cluster) associated with a data processing equipment (35) for processing data enabling to identify doubtful rods and in that the body further comprises means for additional inspection, by ultrasounds, of one rod at a time, among the rods other than those passing through the coils during said movement of the rods of the cluster within the body, during the use thereof for carrying out the method of claim 1.

6. Device according to claim 5, characterized in that each eddy current coil (46) is associated in a differential circuit with a second coil which circumscribes a new rod, for obtaining a signal which depends on the wear condition in a section of the inspected rod with respect to a section of new rod compensated for the effects of the ambient conditions and of cable length.

7. Device according to claim 5 or 6, for inspecting clusters for fuel assemblies where the rods are distributed in a square array, characterized in that the device is arranged for receiving the cluster in m = 4 different orientations.

8. Device according to claim 5, 6 or 7, characterized in that the means for additional inspection comprises an ultrasonic sensor (128) with focussed transmission carried by a unit (126, 142) carried by the part for rotation and means (108, 116, 138, 149) for rotating the unit about the rod to be inspected for obtaining a complete representation of the latter.

9. Device according to claim 8, characterized in that the axis of the sensor (128) is located parallel to the axis of the rod and in that said means for additional inspection comprise means (130) for deviating the ultrasound beam sent toward the rod and the ultrasound beam reflected toward the sensor.

10. Device according to any one of claims 5-9, characterized in that the means for additional inspection comprise a camera (42) provided with a support (92, 94) arranged for providing a passage for the rods to be inspected and carrying mirrors (100) for display of that face of the rod which is opposed to the camera.

11. Device according to any one of claims 5-10, characterized in that the higher part (30) is fast with a plate (50) arranged for receiving the means for additional inspection in a plurality of positions each corresponding to inspection of a particular rod of the cluster or for moving said means into said position.

12. Device according to any one of claims 5-11, characterized in that the part is provided with means (27) for centering the cluster and for moving the latter into one of said m positions.
